# EUROPEAN PATENT APPLICATION

(11) **EP 4 723 586 A1**
(43) Date of publication of application: **08.04.2026**
(21) Application number: 24831031.0
(22) Date of filing: 28.06.2024
(51) Int. Cl.: H04L 45/76, H04L 65/40, H04L 41/0894

(54) **DATA FORWARDING METHOD BASED ON CLOUD SERVICE, AND SYSTEM**

(30) Priority: 30.06.2023 CN 202310796716; 27.09.2023 CN 202311264843
(71) Applicant: Huawei Cloud Computing Technologies Co., Ltd., Guiyang, Guizhou, 550025 (CN)
(72) Inventor: ZHAO, Haifei, Guiyang, Guizhou 550025 (CN); WANG, Ping, Guiyang, Guizhou 550025 (CN); GAO, Tianliang, Guiyang, Guizhou 550025 (CN)
(74) Representative: Grünecker Patent- und Rechtsanwälte PartG mbB
(86) International application number: PCT/CN2024/102558
(87) International publication number: WO 2025/002404

(57) **Abstract**

This application discloses a cloud service-based data forwarding method and system, and belongs to the field of cloud service technologies. The method is applied to a cloud platform, the cloud platform includes a first cloud system, the first cloud system includes a cloud computing device and a forwarding device, and the first cloud system and an extranet system are connected to each other through an extranet gateway. The method includes: The forwarding device obtains a target packet sent by the cloud computing device to the extranet system, and obtains a forwarding attribute of the cloud computing device. When the forwarding attribute of the cloud computing device is a first attribute, the forwarding device forwards the target packet by using the extranet gateway as a next hop of the target packet. When the forwarding attribute of the cloud computing device is a second attribute, the forwarding device forwards the target packet to the extranet gateway based on a routing relationship of the forwarding device. This application can provide differentiated forwarding capabilities, to improve flexibility of packet forwarding.

## Description

This application claims priorities to Chinese Patent Application No. 202310796716.6, filed on June 30, 2023 and entitled "CLOUD SERVICE-BASED DATA FORWARDING METHOD AND APPARATUS", and to Chinese Patent Application No. 202311264843.8, filed on September 27, 2023 and entitled "CLOUD SERVICE-BASED DATA FORWARDING METHOD AND SYSTEM", both of which are incorporated herein by reference in their entireties.

### TECHNICAL FIELD

This application relates to the field of cloud service technologies, and in particular, to a cloud service-based data forwarding method and system.

### BACKGROUND

In cloud scenarios, a plurality of subnetworks (subnetworks, subnets) are created in a virtual private cloud (virtual private cloud, VPC), and there are a plurality of cloud computing resources in each subnet. When the cloud computing resources in the subnet need to access a public network, traffic of the cloud computing resources is usually forwarded to an internet gateway (internet gateway, IGW) between the VPC and the public network based on a routing relationship in the subnet.

However, this causes all traffic in the VPC to compete for a forwarding opportunity, resulting in poor flexibility of forwarding the traffic in the VPC.

### SUMMARY

This application provides a cloud service-based data forwarding method and system. This application can provide differentiated forwarding capabilities, to improve flexibility of packet forwarding. Technical solutions provided in this application are as follows:
According to a first aspect, this application provides a cloud service-based data forwarding method. The method is applied to a cloud platform. The cloud platform includes a first cloud system. The first cloud system includes a cloud computing device and a forwarding device. The first cloud system and an extranet system are connected to each other through an extranet gateway. The method includes: The forwarding device obtains a target packet sent by the cloud computing device to the extranet system. The forwarding device obtains a forwarding attribute of the cloud computing device. When the forwarding attribute of the cloud computing device is a first attribute, the forwarding device forwards the target packet by using the extranet gateway as a next hop of the target packet. When the forwarding attribute of the cloud computing device is a second attribute, the forwarding device forwards the target packet to the extranet gateway based on a routing relationship of the forwarding device.

In this way, the forwarding device can forward the target packet of the cloud computing device based on different forwarding attributes of the cloud computing device according to different forwarding policies, to provide differentiated forwarding capabilities, and improve flexibility of packet forwarding. This helps meet differentiated requirements of a user on a cloud service in different scenarios, thereby implementing a cloud service that better meets a customer requirement.

Before the forwarding device obtains the forwarding attribute of the cloud computing device, the method further includes: The forwarding device receives a configuration instruction, where the configuration instruction indicates the forwarding attribute of the cloud computing device. The forwarding device configures, according to the configuration instruction, a policy for forwarding the packet of the cloud computing device. For example, when the configuration instruction indicates that an EIP bound to the cloud computing device is a policy-based EIP, the forwarding device may use the extranet gateway as the next hop for forwarding the packet of the cloud computing device. When the configuration instruction indicates that an EIP bound to the cloud computing device is a route-based EIP, the forwarding device may set to forward the packet of the cloud computing device based on the routing relationship of the forwarding device.

In an implementation of the configuration instruction, the cloud platform further includes a cloud management system. Before the forwarding device receives the configuration instruction, the method further includes: The cloud management system receives a purchase request sent by the user, where the purchase request indicates to purchase the cloud computing device, and the purchase request carries the configuration instruction. The cloud management system configures the cloud computing device based on the purchase request, and sends the configuration instruction to the forwarding device. The purchase request carries the configuration instruction, and there are at least the following two implementation cases:
For a first implementation case, when the user triggers the purchase request, the configuration instruction is also triggered. For example, on a cloud service purchase page, not only a performance option of the cloud computing device but also a forwarding configuration option of the cloud computing device is set. When the user submits the page, if content in the forwarding configuration option is selected, the purchase request carries the configuration instruction; or if content in the forwarding configuration option is not selected, the purchase request does not carry the configuration instruction.

For a second implementation case, when triggering the purchase request, the user does not trigger the configuration instruction, and the cloud management system triggers a default option of a forwarding configuration. For example, on a cloud service purchase page, a performance option of the cloud computing device is set, but a forwarding configuration option of the cloud computing device is not set. However, a default forwarding configuration policy is configured for each performance option by the cloud management system. After the user selects a performance option, the cloud management system automatically selects, for the user, a default forwarding configuration corresponding to the performance option. When the user submits the page, the purchase request carries a configuration instruction that instructs the default forwarding configuration.

In another implementation of the configuration instruction, a purchase request and the configuration instruction are sent separately. For example, the user may first trigger the purchase request to purchase a cloud computing device that is used to implement the cloud service. Then, when determining that a forwarding policy of the cloud computing device needs to be configured as required, the user triggers the configuration instruction. For example, before the forwarding device receives the configuration instruction, the method further includes: A cloud management system receives a configuration instruction sent by the user, where the configuration instruction indicates a forwarding attribute of a purchased cloud computing device. The cloud management system sends the configuration instruction to the forwarding device.

In this implementation, configuration of the forwarding policy of the cloud computing device may alternatively be provided as a cloud service. To be specific, the purchase request is used to purchase a service cloud service, and the configuration instruction is used to purchase a configuration cloud service. When the configuration instruction instructs to configure a forwarding policy of a cloud computing device providing the service cloud service, the configuration cloud service purchased by using the configuration instruction needs to be bound to the service cloud service purchased by using the purchase request.

A function of configuring the forwarding attribute is provided, so that the user can configure the forwarding attribute of the cloud computing device of the user based on a requirement, thereby improving flexibility of providing the cloud service for the user.

Optionally, when the user needs to modify the forwarding attribute of the cloud computing device, the user may send a modification instruction to the cloud management system through a client used by the user, to instruct to modify the forwarding attribute of the cloud computing device. In this case, the method further includes: The cloud management system receives the modification instruction sent by the user, where the modification instruction instructs to modify the forwarding attribute of the cloud computing device. The cloud management system sends the modification instruction to the forwarding device. The forwarding device adjusts, based on a forwarding attribute indicated by the modification instruction, the policy for forwarding the packet of the cloud computing device.

Optionally, before adjusting, based on a modified forwarding attribute, the policy for forwarding the packet of the cloud computing device, the forwarding device may first stop a service of the cloud computing device, and then adjust the policy for forwarding the packet of the cloud computing device, to avoid impact of a forwarding policy adjustment process on the service for which the cloud computing device is responsible. There are a plurality of triggering manners of stopping the service of the cloud computing device. In this embodiment of this application, the following two implementations are used as examples for description.

In an implementation, the cloud computing device spontaneously stops the service according to the modification instruction. An implementation process includes: After receiving the modification instruction, the cloud management system may send the modification instruction to the cloud computing device, and the cloud computing device stops the service of the cloud computing device according to the modification instruction.

In another implementation, the user sends a stop instruction to the cloud management system, and the cloud computing device stops the service according to the stop instruction. An implementation process includes: The cloud management system receives the stop instruction sent by the user, and sends the stop instruction to the cloud computing device, and the cloud computing device stops the service of the cloud computing device according to the stop instruction. The stop instruction instructs to stop the service of the cloud computing device, to modify the forwarding attribute of the cloud computing device.

According to a second aspect, this application provides a cloud service-based data forwarding system. The system is used in a cloud platform. The system includes a first cloud system. The first cloud system includes a cloud computing device and a forwarding device. The first cloud system and an extranet system are connected to each other through an extranet gateway. The forwarding device is configured to obtain a target packet sent by the cloud computing device to the extranet system. The forwarding device is further configured to obtain a forwarding attribute of the cloud computing device. When the forwarding attribute of the cloud computing device is a first attribute, the forwarding device is configured to forward the target packet by using the extranet gateway as a next hop of the target packet. When the forwarding attribute of the cloud computing device is a second attribute, the forwarding device is configured to forward the target packet to the extranet gateway based on a routing relationship of the forwarding device.

Optionally, the forwarding device is further configured to receive a configuration instruction, where the configuration instruction indicates the forwarding attribute of the cloud computing device. The forwarding device is further configured to configure, according to the configuration instruction, a policy for forwarding the packet of the cloud computing device.

Optionally, the system further includes a cloud management system. The cloud management system is configured to: receive a purchase request sent by a user, where the purchase request indicates to purchase the cloud computing device, and the purchase request carries the configuration instruction; configure the cloud computing device based on the purchase request; and send the configuration instruction to the forwarding device.

Optionally, the cloud management system is further configured to: receive a configuration instruction sent by the user, where the configuration instruction indicates a forwarding attribute of a purchased cloud computing device; and send the configuration instruction to the forwarding device.

Optionally, the cloud management system is further configured to: receive a modification instruction sent by the user, where the modification instruction instructs to modify the forwarding attribute of the cloud computing device; and send the modification instruction to the forwarding device. In this case, the forwarding device is further configured to adjust, based on a forwarding attribute indicated by the modification instruction, the policy for forwarding the packet of the cloud computing device.

Optionally, the cloud management system is further configured to send the modification instruction to the cloud computing device, and the cloud computing device stops a service of the cloud computing device according to the modification instruction.

Optionally, the cloud management system is further configured to: receive a stop instruction sent by the user, where the stop instruction instructs to stop a service of the cloud computing device, to modify the forwarding attribute of the cloud computing device; and send the stop instruction to the cloud computing device.

In this case, the cloud computing device is further configured to stop the service of the cloud computing device according to the stop instruction.

According to a third aspect, this application provides a computing device, including a memory and a processor. The memory stores program instructions. The processor runs the program instructions to perform the method according to any one of the first aspect and the possible implementations of the first aspect in this application.

According to a fourth aspect, this application provides a computing device cluster, including a plurality of computing devices. The plurality of computing devices include a plurality of processors and a plurality of memories. The plurality of memories store program instructions, and the plurality of processors run the program instructions, to cause the computing device cluster to perform the method according to any one of the first aspect and the possible implementations of the first aspect in this application.

According to a fifth aspect, this application provides a computer-readable storage medium. The computer-readable storage medium is a non-volatile computer-readable storage medium. The computer-readable storage medium includes program instructions. When the program instructions are run on a computing device, the computing device is caused to perform the method according to any one of the first aspect and the possible implementations of the first aspect in this application.

According to a sixth aspect, this application provides a computer program product including instructions. When the computer program product runs on a computer, the computer is caused to perform the method according to any one of the first aspect and the possible implementations of the first aspect in this application.

### BRIEF DESCRIPTION OF DRAWINGS

FIG. 1 is a diagram of an application scenario of a cloud service-based data forwarding method according to an embodiment of this application;
FIG. 2 is a diagram of another application scenario of a cloud service-based data forwarding method according to an embodiment of this application;
FIG. 3 is a diagram of a structure of a first cloud system according to an embodiment of this application;
FIG. 4 is a flowchart of a cloud service-based data forwarding method according to an embodiment of this application;
FIG. 5 is a diagram of a cloud service purchase page according to an embodiment of this application;
FIG. 6 is a diagram of another cloud service purchase page according to an embodiment of this application;
FIG. 7 is a diagram of a packet forwarding process of a first cloud system according to an embodiment of this application;
FIG. 8 is a diagram of a page of a cloud management system according to an embodiment of this application;
FIG. 9 is a diagram of a structure of a cloud service-based data forwarding system according to an embodiment of this application;
FIG. 10 is a diagram of another structure of a cloud service-based data forwarding system according to an embodiment of this application;
FIG. 11 is a diagram of a structure of a computing device according to an embodiment of this application; and
FIG. 12 is a diagram of a structure of a computing device cluster according to an embodiment of this application.

### DESCRIPTION OF EMBODIMENTS

To make the objectives, technical solutions, and advantages of this application clearer, the following further describes implementations of this application in detail with reference to the accompanying drawings.

For ease of understanding, the following first explains technologies and the background in embodiments of this application.

Network address translation (network address translation, NAT) is a technology that performs address translation on at least one of destination and source IP addresses of a packet to be sent by replacing address information in an IP packet header. The NAT technology may include: destination network address translation (destination network address translation, DNAT), source network address translation (source network address translation, SNAT), and full network address translation (full network address translation, Full NAT). The DNAT refers to the translation of a packet's destination IP address. The SNAT refers to the translation of a packet's source IP address. The full NAT refers to the translation of packet's destination and source IP addresses.

An elastic internet protocol (elastic internet protocol, EIP) address is an IP address used by a computer device in a private network to access a public network.

A virtual switch (also referred to as a virtual network switch, virtual switch, vSwitch) runs on a virtualization platform, and provides layer 2 network access and some layer 3 network functions for virtual machines (virtual machine, VM) by using software. The vSwitch is connected to an extranet by using a physical network interface card on a physical host as an uplink. In an implementation, the virtual switch used in this application may be an open virtual switch (open vSwitch).

The virtual machine (virtual machine, VM) is a complete computer system simulated by using a virtualization technology, and functions as a complete hardware system and runs in a completely isolated environment. Some instruction subsets of the virtual machine may be processed in a host (host) machine, and some other instructions may be executed in a simulation manner. A user may purchase a cloud service by renting the virtual machine. In a possible implementation of the virtual machine, the virtual machine in embodiments of this application may be an elastic cloud service (elastic compute service, ECS).

The elastic cloud server is a self-service and on-demand cloud server that can be elastically scalable cloud server. ECS eliminates upfront procurement of IT hardware, and allows users to use the server as conveniently and efficiently as public utilities such as water, electricity, and natural gas, enabling instant availability of compute resources and elastic scaling. Elastic scaling means that server resources such as CPUs, memories, and bandwidth can be configured based on service needs.

A bare metal server (bare metal server, BMS) is a computing service that combines performance of both elastic cloud servers and physical machines, delivering dedicated physical cloud servers for users. Because the bare metal server has a resource-exclusive characteristic, the bare metal server is preferred for scenarios demanding strict security isolation, for example, banking, finance, and securities industries, and for users requiring extreme performance requirements. Currently, the bare metal server provides excellent computing performance and ensures data security for services such as core databases, critical application systems, high-performance computing, and big data.

A gateway (gateway) is also referred to as an inter-network connector or a protocol converter. The gateway enables network interconnection above a network layer, and is a complex network interconnection device, typically used for interconnection between two networks using different high-layer protocols. The gateway may be used for wide area network interconnection and local area network interconnection. In addition, because the gateway is used between two systems with different communication protocols, data formats, languages, or even completely different architectures, the gateway also shoulder the task of conversion between the two systems. It should be noted that the gateway in embodiments of this application may be deployed by using the virtual machine, or may be deployed by using a physical server. This is not specifically limited in embodiments of this application.

Embodiments of this application provide a cloud service-based data forwarding method. The method is applied to a cloud platform. The cloud platform includes a first cloud system. The first cloud system includes a cloud computing device and a forwarding device. The first cloud system and an extranet system are connected to each other through an extranet gateway. The method includes: The forwarding device obtains a target packet sent by the cloud computing device to the extranet system, and obtains a forwarding attribute of the cloud computing device. When the forwarding attribute of the cloud computing device is a first attribute, the forwarding device forwards the target packet by using the extranet gateway as a next hop of the target packet. When the forwarding attribute of the cloud computing device is a second attribute, the forwarding device forwards the target packet to the extranet gateway based on a routing relationship of the forwarding device.

In this way, the forwarding device can forward the target packet of the cloud computing device based on different forwarding attributes of the cloud computing device according to different forwarding policies, to provide differentiated forwarding capabilities, and improve flexibility of packet forwarding. This helps meet differentiated requirements of a user on a cloud service in different scenarios.

The technical solutions of this application are described in detail in this specification from a plurality of perspectives such as an implementation scenario, a system composition, a method procedure, and a hardware apparatus.

The following first describes examples of an application scenario of embodiments of this application.

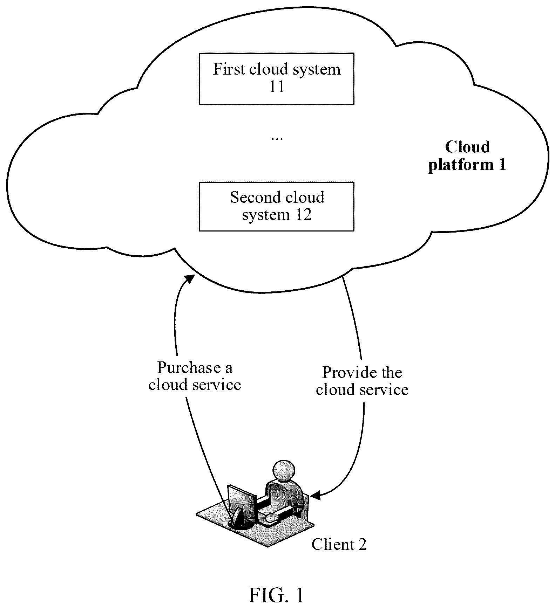

FIG. 1 is a diagram of a structure of an implementation environment related to a cloud service-based data forwarding method according to an embodiment of this application. As shown in FIG. 1, the implementation environment includes a cloud platform 1 and a client 2. A communication connection may be established between the cloud platform 1 and the client 2 via a network. Optionally, the network may be a local area network, or may be the Internet, or may be another network. This is not limited in embodiments of this application. A user (also referred to as a tenant or a cloud tenant) can interact with the cloud platform 1 through the client 2. For example, the user may send information such as instructions and a service request to the cloud platform 1 through the client 2. The cloud platform 1 is configured to provide a corresponding cloud service for the user based on the information sent to the cloud platform 1 by the client 2. The cloud service may be provided as an independent cloud service, or may be provided as an additional service of another cloud service. This is not specifically limited in embodiments of this application.

The client 2 may be a computer, a personal computer, a laptop computer, a mobile phone, a smartphone, a tablet computer, a cloud host, a portable mobile terminal, a multimedia player, an e-book reader, a wearable device, a smart home appliance, an artificial intelligence device, a smart wearable device, a smart vehicle-mounted device, an internet of things device, or the like.

In embodiments of this application, the cloud platform 1 may be a cloud platform 1 of a central cloud, a cloud platform 1 of an edge cloud, or a cloud platform 1 including the central cloud and the edge cloud. This is not specifically limited in embodiments of this application. In addition, when the cloud platform 1 is the cloud platform 1 including the central cloud and the edge cloud, a part of the cloud service-based data forwarding method provided in embodiments of this application may be performed by a cloud platform 1 deployed at the edge cloud, and a part is performed by a cloud platform 1 deployed at the central cloud.

A large quantity of basic resources owned by a cloud service provider, such as computing resources, storage resources, and network resources, are deployed on the cloud platform 1. For example, the computing resource may be a computing device (for example, a server) that can provide a computing capability. The cloud platform 1 may deploy a cloud system by using the basic resources that are deployed on the cloud platform 1, to provide a corresponding cloud service for the user by using the cloud system.

The cloud platform 1 includes one or more cloud systems. For example, as shown in FIG. 1, the cloud platform 1 includes a first cloud system 11 and a second cloud system 12. A communication connection can be established between the cloud systems, and a communication connection can further be established between each cloud system and a network system other than the cloud platform 1. For any cloud system, another cloud system and the network system other than the cloud platform 1 each may be referred to as an extranet system. Any cloud system and the extranet system are connected to each other through an extranet gateway.

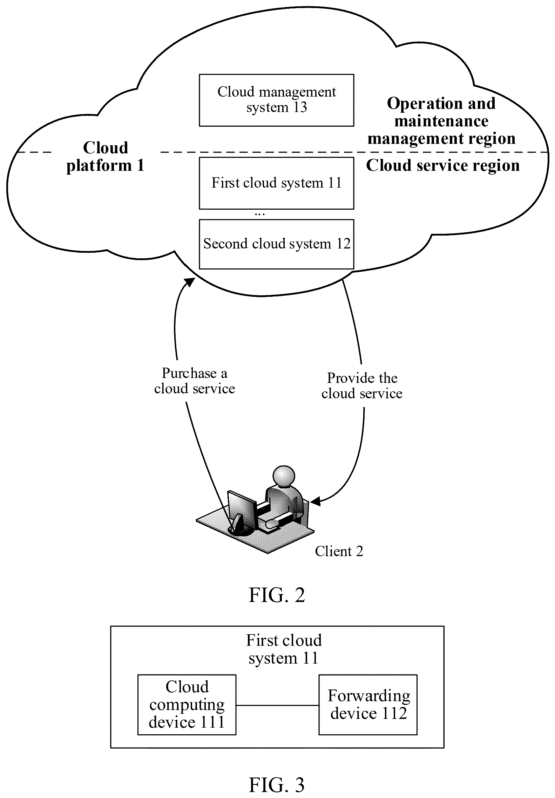

Optionally, as shown in FIG. 2, the cloud platform 1 may further include a cloud management system 13. The cloud management system 13 is configured to manage the resources on the cloud platform 1. In an implementation, the cloud management system 13 is configured to: interact with the user, and manage the resources on the cloud platform 1 based on a requirement of the user. For example, the cloud management system 13 is configured to: receive a cloud service purchase request (also referred to as a purchase request) of the user, create a cloud computing device based on the cloud service purchase request, and use the cloud computing device to provide a corresponding cloud service for the user. For another example, the cloud management system 13 is configured to: receive a configuration instruction provided by the user, and adjust, according to the configuration instruction, a configuration of a cloud computing device instructed by the cloud management system 13.

In an implementation, as shown in FIG. 2, the cloud platform 1 may be divided into an operation and maintenance management region and a cloud service region based on functions. In this case, the cloud management system 13 may be deployed in the operation and maintenance management region, and the cloud system may be deployed in the cloud service region. Resources in the operation and maintenance management region are used to manage resources in the cloud service region. For example, the resources in the operation and maintenance management region are used to create a cloud system based on the resources in the cloud service region. The resources in the cloud service region are used to provide a cloud service for the user. It should be noted that the cloud platform 1 may further include another functional region. That the cloud platform 1 includes the operation and maintenance management region and the cloud service region in the foregoing descriptions is merely an example, and is not used to limit a function of the cloud platform 1.

FIG. 3 is a diagram of a first cloud system 11 according to an embodiment of this application. As shown in FIG. 3, the first cloud system 11 includes a cloud computing device 111 and a forwarding device 112. A communication connection can be established between the cloud computing device 111 and the forwarding device 112. Both the cloud computing device 111 and the forwarding device 112 can directly or indirectly send a packet to an extranet gateway, to send the packet to an extranet system through the extranet gateway. The cloud computing device 111 may be implemented by using one or more devices such as a physical machine, a bare metal server, a cloud server, a virtual machine, and a container. The forwarding device 112 may be a switch, a virtual switch, or the like. The first cloud system 11 may be a private cloud system. The extranet system may be a public cloud system, a private cloud system, a data center, or a network system of another type.

In the first cloud system 11, the cloud computing device 111 is configured to implement a service of a user, that is, the cloud computing device 111 is configured to provide a cloud service for the user. For example, the cloud computing device 111 is an elastic cloud server created by the cloud platform 1 for the user, and the elastic cloud server is configured to provide an elastic cloud service for the user. In a process of implementing the service of the user, the cloud computing device 111 may need to communicate with an extranet system outside the first cloud system 11. In this case, a target packet sent by the cloud computing device 111 to the extranet system may be sent to the extranet system via the forwarding device 112 and/or the extranet gateway. In embodiments of this application, the cloud computing device 111 has a capability of being configured with different forwarding attributes. The forwarding attribute of the cloud computing device 111 indicates a manner of forwarding the target packet of the cloud computing device 111. In this way, based on different considerations, the user can configure different forwarding attributes for the cloud computing device 111, to forward the packet of the cloud computing device 111 in different forwarding manners.

In an implementation, the cloud service-based data forwarding method provided in embodiments of this application may be implemented by running an executable program by a computing device on the cloud platform 1. For example, a function of the forwarding device 112 in the cloud service-based data forwarding method may be presented in a form of an application program installation package. After the application program installation package is installed, the computing device on the cloud platform 1 can implement a related function of the forwarding device 112 by running an executable program in the application program installation package.

It should be understood that the foregoing content is an example of application scenarios of the cloud service-based data forwarding method provided in embodiments of this application, and does not constitute a limitation on the application scenarios of the cloud service-based data forwarding method. A person of ordinary skill in the art may learn that, as a service requirement changes, the application scenarios of the cloud service-based data forwarding method may be adjusted based on an application requirement. The application scenarios are not listed one by one in embodiments of this application. In an example, based on an idea of the cloud service-based data forwarding method provided in embodiments of this application, more refined source-based routing may be further performed on traffic of a cloud service through more refined control, to implement customized diversion on the traffic of the cloud service. In addition, a path may further be designed for the traffic of the cloud service based on a capability of a service chain (service chain), to implement a more customized capability, so as to provide a programmable network service.

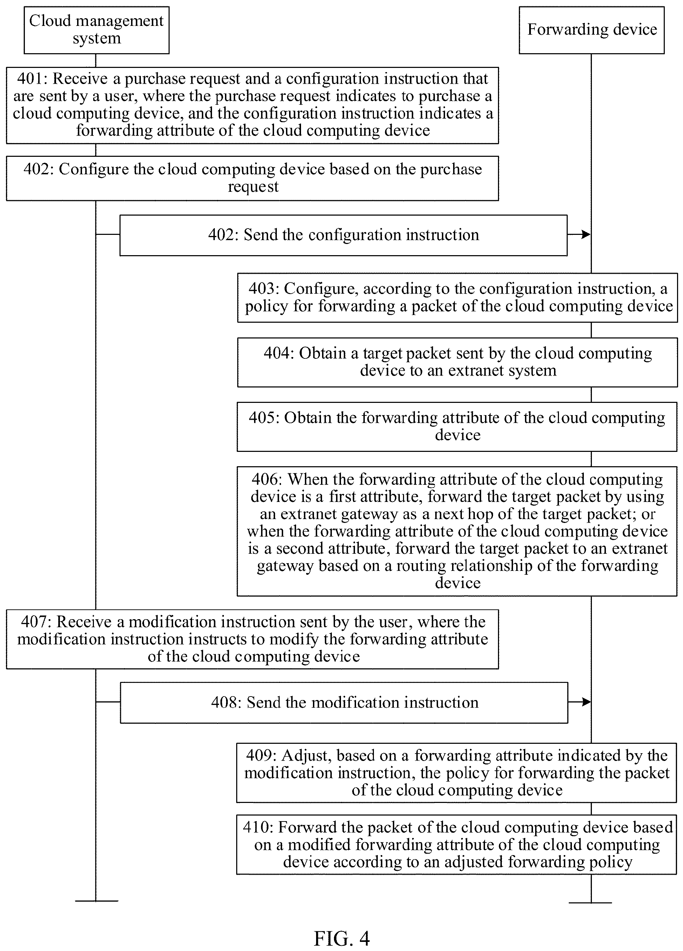

The following describes an implementation process of the cloud service-based data forwarding method provided in embodiments of this application. The method is applied to a cloud platform. The cloud platform includes a first cloud system and a cloud management system. The first cloud system includes a cloud computing device and a forwarding device. As shown in FIG. 4, the method includes the following steps.

Step 401: The cloud management system receives a purchase request and a configuration instruction that are sent by a user, where the purchase request indicates to purchase the cloud computing device, and the configuration instruction indicates a forwarding attribute of the cloud computing device.

When the user needs to use a cloud service, the user may send the purchase request to the cloud management system through a client used by the user, to request to purchase the cloud service. A process in which the cloud platform provides the cloud service for the user based on the purchase request is actually a process in which the cloud platform creates the cloud computing device based on the purchase request, and provides the cloud service for the user by using the cloud computing device. Therefore, the purchase request is also referred to as a request that indicates to purchase the cloud computing device.

The user provides the configuration instruction for the cloud management system in a plurality of manners. The following two implementations are used as examples for description in this embodiment of this application.

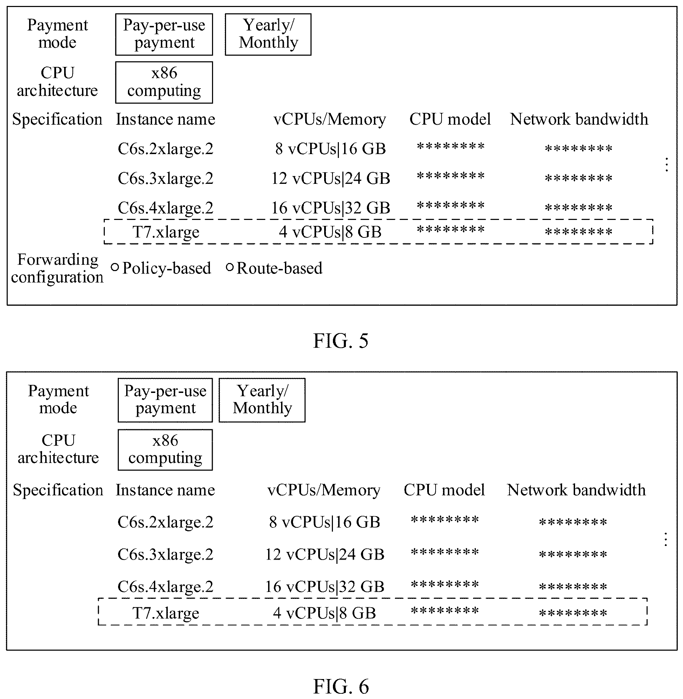

In an implementation, the purchase request carries the configuration instruction, and there are at least the following two implementation cases:
For a first implementation case, when the user triggers the purchase request, the configuration instruction is also triggered. For example, as shown in FIG. 5, on a cloud service purchase page, not only a performance option of the cloud computing device but also a forwarding configuration option of the cloud computing device is set. The performance option is provided for the user to select parameters such as a quantity of cores of a virtual processor (vCPU), a memory, and bandwidth that are used by the cloud computing device. The forwarding configuration option is provided for the user to select a forwarding attribute of the cloud computing device, for example, select the forwarding attribute of the cloud computing device as policy-based forwarding or route-based forwarding. The performance option is mandatory, and the forwarding configuration option is optional. When the user submits the page, if content in the forwarding configuration option is selected, the purchase request carries the configuration instruction; or if content in the forwarding configuration option is not selected, the purchase request does not carry the configuration instruction. It should be noted that, that the forwarding configuration option herein is optional is merely an example. Alternatively, the forwarding configuration option may be mandatory, and a manner of setting the forwarding configuration option may be adjusted based on an application requirement.

For a second implementation case, when triggering the purchase request, the user does not trigger the configuration instruction, and the cloud management system triggers a default option of a forwarding configuration. For example, as shown in FIG. 6, on a cloud service purchase page, a performance option of the cloud computing device is set, but a forwarding configuration option of the cloud computing device is not set. However, a default forwarding configuration policy is configured for each performance option by the cloud management system. After the user selects a performance option, the cloud management system automatically selects, for the user, a default forwarding configuration corresponding to the performance option. When the user submits the page, the purchase request carries a configuration instruction that instructs the default forwarding configuration.

In another implementation, the purchase request and the configuration instruction are sent separately. For example, the user may first trigger the purchase request to purchase a cloud computing device that is used to implement the cloud service. Then, when determining that a forwarding policy of the cloud computing device needs to be configured as required, the user triggers the configuration instruction. For example, when the user needs to use an ECS, the user may trigger the purchase request to request to purchase a cloud service provided by the ECS. In a process of using the cloud service provided by the ECS, the user may further trigger the configuration instruction, to instruct to configure a forwarding policy of the ECS.

In this implementation, configuration of the forwarding policy of the cloud computing device may alternatively be provided as a cloud service. To be specific, the purchase request is used to purchase a service cloud service, and the configuration instruction is used to purchase a configuration cloud service. When the configuration instruction instructs to configure a forwarding policy of a cloud computing device providing the service cloud service, the configuration cloud service purchased by using the configuration instruction needs to be bound to the service cloud service purchased by using the purchase request. For example, when the user needs to use the ECS, the user may trigger the purchase request to request to purchase a service cloud service provided by the ECS. In a process of using the service cloud service provided by the ECS, the user may trigger the configuration instruction to purchase a configuration cloud service that is used to configure a forwarding policy, and the user may bind the configuration cloud service to the service cloud service provided by the ECS, so as to configure the forwarding policy of the ECS.

In addition, when the first cloud system is a virtual private cloud, the essence of the configuration instruction is to bind the cloud computing device to an internet protocol (internet protocol, IP) address of a public network, and set a forwarding manner in which a packet of the cloud computing device is transmitted to an extranet gateway. For example, when the first cloud system uses an elastic public network, the configuration instruction is to bind the cloud computing device to an elastic internet protocol (elastic internet protocol, EIP) address, and set whether the cloud computing device uses the extranet gateway as a next hop of a forwarding device used by the cloud computing device, or a packet of the cloud computing device is transmitted to the extranet gateway based on a routing relationship of the forwarding device. When that the cloud computing device uses the extranet gateway as the next hop of the forwarding device used by the cloud computing device is set, an EIP bound to the cloud computing device may be referred to as a policy-based EIP. When that the packet of the cloud computing device is transmitted to the extranet gateway based on the routing relationship of the forwarding device, an EIP bound to the cloud computing device may be referred to as a route-based EIP.

A function of configuring the forwarding attribute is provided, so that the user can configure the forwarding attribute of the cloud computing device of the user based on a requirement, thereby improving flexibility of providing the cloud service for the user.

Step 402: The cloud management system configures the cloud computing device based on the purchase request, and sends the configuration instruction to the forwarding device.

After receiving the purchase request, the cloud management system may configure the cloud computing device for the user by using a basic resource of the cloud platform, and indicate the cloud computing device to implement a service of the user. Then, the cloud management system may send the configuration instruction to the forwarding device, to instruct the forwarding device to set, according to the configuration instruction, a policy for forwarding the packet of the cloud computing device. In an implementation, the cloud management system may send the configuration instruction to a forwarding plane of the first cloud system, so that the forwarding plane performs configuration according to the configuration instruction.

Step 403: The forwarding device configures, according to the configuration instruction, the policy for forwarding the packet of the cloud computing device.

After receiving the configuration instruction, the forwarding device may configure, as instructed by the configuration instruction, the policy for forwarding the packet of the cloud computing device. For example, when the configuration instruction indicates that an EIP bound to the cloud computing device is the policy-based EIP, the forwarding device may use the extranet gateway as the next hop for forwarding the packet of the cloud computing device. When the configuration instruction indicates that an EIP bound to the cloud computing device is the route-based EIP, the forwarding device may set to forward the packet of the cloud computing device based on the routing relationship of the forwarding device.

Step 404: The forwarding device obtains a target packet sent by the cloud computing device to an extranet system.

When implementing the service of the user, the cloud computing device may send the target packet to the extranet system when the cloud computing device needs to interact with the extranet system. A source IP address of the target packet is an IP address of the cloud computing device, and a destination IP address is an IP address of a computing device in the extranet system. After sending the target packet, the cloud computing device transmits the target packet to the forwarding device, to send the target packet to the extranet system via the forwarding device.

Step 405: The forwarding device obtains the forwarding attribute of the cloud computing device.

After obtaining the target packet of the cloud computing device, the forwarding device needs to first obtain the forwarding attribute of the cloud computing device to determine a manner of forwarding the target packet. In an implementation, the cloud computing device may send the forwarding attribute of the cloud computing device to the forwarding device. For example, each time the forwarding attribute of the cloud computing device changes, the cloud computing device may send the forwarding attribute of the cloud computing device to the forwarding device, and the forwarding device may record the forwarding attribute of the cloud computing device in the forwarding device. After receiving the target packet of the cloud computing device, the forwarding device may query recorded information of the forwarding device for the forwarding attribute of the cloud computing device based on the target packet. For another example, the target packet may carry indication information, and the indication information indicates the forwarding attribute of the cloud computing device. After receiving the target packet, the forwarding device may obtain the forwarding attribute of the cloud computing device from the target packet.

Step 406: When the forwarding attribute of the cloud computing device is a first attribute, the forwarding device forwards the target packet by using the extranet gateway as a next hop of the target packet; or when the forwarding attribute of the cloud computing device is a second attribute, the forwarding device forwards the target packet to the extranet gateway based on the routing relationship of the forwarding device.

The cloud computing device may have one or more alternative forwarding attributes, and each alternative forwarding attribute corresponds to one forwarding policy. After obtaining the forwarding attribute of the cloud computing device, the forwarding device can obtain a forwarding policy corresponding to the forwarding attribute, and forward the target packet according to the forwarding policy. For example, the alternative forwarding attributes of the cloud computing device include the first attribute and the second attribute. A forwarding policy corresponding to the first attribute is that the forwarding device forwards the target packet by using the extranet gateway as the next hop of the target packet. A forwarding policy corresponding to the second attribute is that the forwarding device forwards the target packet to the extranet gateway based on the routing relationship of the forwarding device. In this case, when the forwarding attribute that is of the cloud computing device and that is obtained by the forwarding device is the first attribute, the forwarding device forwards the target packet by using the extranet gateway as the next hop of the target packet. When the forwarding attribute that is of the cloud computing device and that is obtained by the forwarding device is the second attribute, the forwarding device forwards the target packet to the extranet gateway based on the routing relationship of the forwarding device. The following uses an example in which a forwarding attribute indicates that the EIP bound to the cloud computing device is the policy-based EIP, and a forwarding attribute indicates that the EIP bound to the cloud computing device is the route-based EIP, to describe forwarding policies corresponding to the two forwarding attributes.

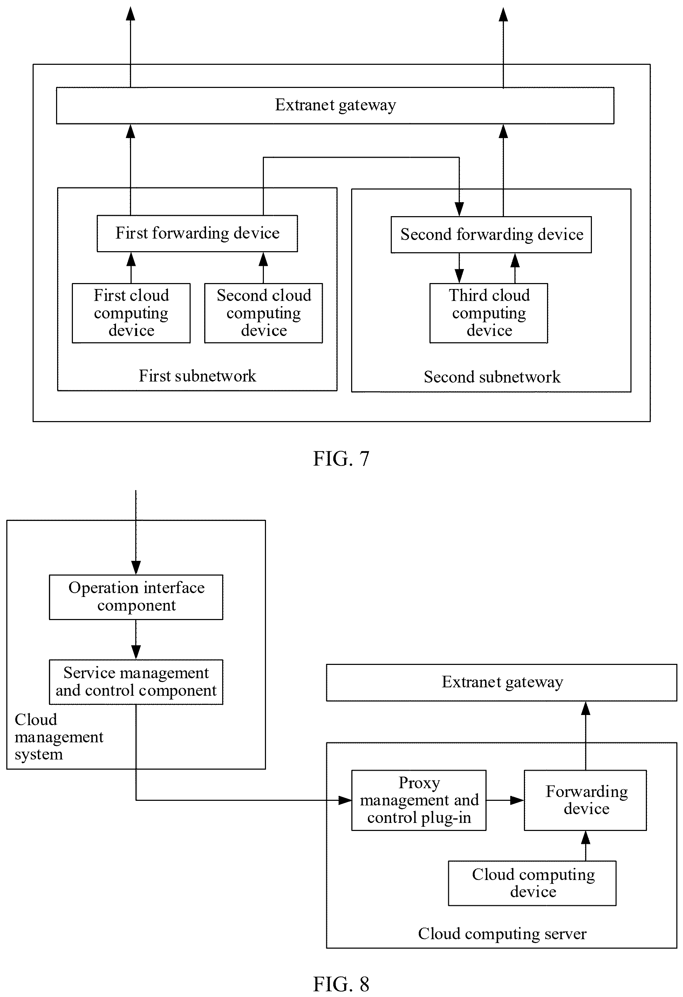

It is assumed that the first cloud system includes a first subnetwork and a second subnetwork. A first forwarding device is deployed in the first subnetwork. A second forwarding device is deployed in the second subnetwork. A default route of the first subnetwork points to a third cloud computing device. A default route of the second subnetwork points to the extranet gateway. A first cloud computing device and a second cloud computing device are configured in the first subnetwork. The third cloud computing device is configured in the second subnetwork. A private IP address of the first cloud computing device is PIP01. An EIP bound to the first cloud computing device is a policy-based EIP, and an external IP address of the first cloud computing device is EIP01. A private IP address of the second cloud computing device is PIP02. An EIP bound to the second cloud computing device is a route-based EIP, and an external IP address of the second cloud computing device is EIP02. A private IP address of the third cloud computing device is PIP03. FIG. 7 is a diagram of a packet forwarding process of a first cloud system according to an embodiment of this application.

As shown in FIG. 7, when the first cloud computing device needs to send a first packet to the extranet system, the first packet is first sent to the first forwarding device. After receiving the first packet, the first forwarding device obtains a forwarding attribute of the first cloud computing device, indicating that the EIP bound to the first cloud computing device is the policy-based EIP. In this case, the first forwarding device forwards the first packet by using the extranet gateway as a next hop of the first packet, so that the first packet can be directly forwarded to the extranet gateway. After the extranet gateway receives the first packet, because a source IP address of the first packet is PIP01, the extranet gateway may perform address translation (NAT) on the first packet, to translate the source IP address of the first packet into the external IP address EIP01 corresponding to PIP01, and then forward the first packet after the address translation.

As shown in FIG. 7, when the second cloud computing device needs to send a second packet to the extranet system, the second packet is first sent to the first forwarding device. After receiving the second packet, the first forwarding device obtains a forwarding attribute of the second cloud computing device, indicating that the EIP bound to the second cloud computing device is the route-based EIP. In this case, the first forwarding device forwards the second packet to the extranet gateway based on the routing relationship of the forwarding device. Because the default route of the first subnetwork points to the third cloud computing device, the first forwarding device forwards the second packet to the third cloud computing device. After receiving the second packet, the third cloud computing device forwards the second packet to the second forwarding device. After receiving the second packet, the second forwarding device obtains the forwarding attribute of the second cloud computing device, indicating that the EIP bound to the second cloud computing device is the route-based EIP. In this case, the second forwarding device forwards the second packet to the extranet gateway based on the routing relationship of the forwarding device. Because the default route of the second subnetwork points to the extranet gateway, the second forwarding device forwards the second packet to the extranet gateway. After the extranet gateway receives the second packet, because a source IP address of the second packet is PIP02, the extranet gateway may perform address translation on the second packet, to translate the source IP address of the second packet into the external IP address EIP02 corresponding to PIP02, and then forward the second packet after the address translation.

Optionally, an application program for preprocessing a packet may be further installed in the third cloud computing device, to preprocess a packet sent through the third cloud computing device. For example, a firewall application program is installed in the third cloud computing device. Before forwarding the packet, the third cloud computing device may filter the packet by using the firewall application program, to ensure security of the packet.

It can be learned from the foregoing that when the EIP bound to the cloud computing device is the policy-based EIP, a packet sent by the cloud computing device may be directly transmitted to the extranet system according to the EIP, and is not affected by a default route. In this way, a packet of a critical service can be transmitted according to an independent EIP, and does not need to compete for a forwarding opportunity with a packet of a common service, so that independence and security of packet transmission is ensured to a great extent.

Step 407: The cloud management system receives a modification instruction sent by the user, where the modification instruction instructs to modify the forwarding attribute of the cloud computing device.

When the user needs to modify the forwarding attribute of the cloud computing device, the user may send the modification instruction to the cloud management system through the client used by the user, to instruct to modify the forwarding attribute of the cloud computing device.

Step 408: The cloud management system sends the modification instruction to the forwarding device.

The cloud management system may send the modification instruction to the forwarding device, to instruct the forwarding device to adjust, according to the modification instruction, the policy for forwarding the packet of the cloud computing device. In an implementation, the cloud management system may send the modification instruction to the forwarding plane of the first cloud system, for the forwarding plane to perform configuration according to the modification instruction.

Step 409: The forwarding device adjusts, based on a forwarding attribute indicated by the modification instruction, the policy for forwarding the packet of the cloud computing device.

Adjusting the forwarding policy for forwarding the packet of the cloud computing device is a process in which a forwarding configuration for the cloud computing device takes effect again based on a modified forwarding attribute. After the forwarding configuration takes effect, the packet of the cloud computing device can be forwarded based on the modified forwarding attribute of the cloud computing device by using the forwarding configuration that takes effect again. A function of modifying the forwarding attribute is provided, so that the user can adjust the forwarding attribute of the cloud computing device of the user based on a requirement, thereby improving flexibility of providing the cloud service for the user.

Optionally, before adjusting, based on the modified forwarding attribute, the policy for forwarding the packet of the cloud computing device, the forwarding device may first stop a service of the cloud computing device, and then adjust the policy for forwarding the packet of the cloud computing device, to avoid impact of a forwarding policy adjustment process on the service for which the cloud computing device is responsible. There are a plurality of triggering manners of stopping the service of the cloud computing device. In this embodiment of this application, the following two implementations are used as examples for description.

In an implementation, the cloud computing device spontaneously stops the service according to the modification instruction. An implementation process includes: After receiving the modification instruction, the cloud management system may send the modification instruction to the cloud computing device, and the cloud computing device stops the service of the cloud computing device according to the modification instruction.

In another implementation, the user sends a stop instruction to the cloud management system, and the cloud computing device stops the service according to the stop instruction. An implementation process includes: The cloud management system receives the stop instruction sent by the user, and sends the stop instruction to the cloud computing device, and the cloud computing device stops the service of the cloud computing device according to the stop instruction. The stop instruction instructs to stop the service of the cloud computing device, to modify the forwarding attribute of the cloud computing device. In this implementation, the stop instruction and the modification instruction may be carried in one instruction for sending, or the stop instruction and the modification instruction may be separately sent. This is not specifically limited in this embodiment of this application.

Step 410: The forwarding device forwards the packet of the cloud computing device based on the modified forwarding attribute of the cloud computing device according to an adjusted forwarding policy.

After the forwarding attribute of the cloud computing device is modified, the service of the cloud computing device may be restarted. Correspondingly, the forwarding device may forward the packet of the cloud computing device based on the modified forwarding attribute of the cloud computing device according to the adjusted forwarding policy. For a forwarding implementation process, refer to the descriptions in the foregoing steps. Details are not described herein again.

In embodiments of this application, a process in which the cloud platform implements the cloud service-based data forwarding method provided in embodiments of this application may be implemented by a plurality of functional modules in cooperation. For example, as shown in FIG. 8, a cloud management system may provide an operation page (console) component and a service management and control component, and a cloud computing server is configured with a proxy management and control plug-in (for example, an agent), a forwarding device, and a cloud computing device. The operation page component can provide an operation page, and a user may set a forwarding attribute of the cloud computing device on the operation page, for example, set an EIP bound to the cloud computing device to a policy-based EIP or a route-based EIP. After receiving a setting operation of the user, the operation page may invoke the service management and control component, translate the setting operation of the user into a configuration instruction, and forward the configuration instruction to the proxy management and control plug-in. After receiving the configuration instruction, the proxy management and control plug-in sends the configuration instruction to the forwarding device. After receiving the configuration command, the forwarding device configures, according to the configuration instruction, a policy for forwarding a packet of the cloud computing device.

It can be learned from the foregoing that, in the cloud service-based data forwarding method provided in embodiments of this application, a forwarding device obtains a target packet sent by a cloud computing device to an extranet system, and obtains a forwarding attribute of the cloud computing device. When the forwarding attribute of the cloud computing device is a first attribute, the forwarding device forwards the target packet by using an extranet gateway as a next hop of the target packet. When the forwarding attribute of the cloud computing device is a second attribute, the forwarding device forwards the target packet to an extranet gateway based on a routing relationship of the forwarding device. In this way, the forwarding device can forward the target packet of the cloud computing device based on different forwarding attributes of the cloud computing device according to different forwarding policies, to provide differentiated forwarding capabilities, and improve flexibility of packet forwarding. This helps meet differentiated requirements of a user on a cloud service in different scenarios, thereby implementing a cloud service that better meets a customer requirement.

It should be noted that a sequence of the steps of the cloud service-based data forwarding method provided in embodiments of this application may be properly adjusted, and the steps may also be correspondingly added or deleted based on situations. Any variation method readily figured out by a person skilled in the art within the technical scope disclosed in this application shall fall within the protection scope of this application. Therefore, details are not described again.

The following describes a virtual apparatus in embodiments of this application by using an example.

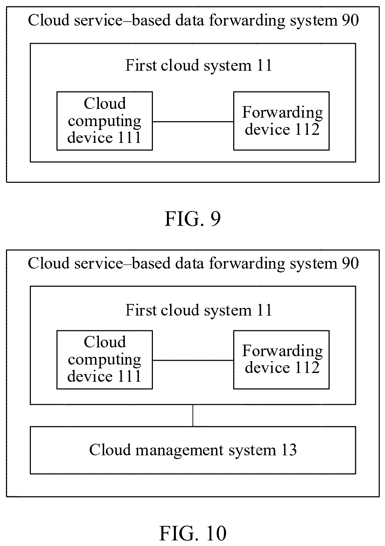

The foregoing describes the cloud service-based data forwarding method in embodiments of this application. Corresponding to the foregoing method, embodiments of this application further provide a cloud service-based data forwarding system. FIG. 9 is a diagram of a structure of a cloud service-based data forwarding system according to an embodiment of this application. Based on the following plurality of components shown in FIG. 9, the cloud service-based data forwarding system shown in FIG. 9 can perform all or some of the operations shown in FIG. 4. It should be understood that, the system may include more additional components than the shown components, or some of the shown components may be omitted. This is not limited in this embodiment of this application. Optionally, the cloud service-based data forwarding system may be configured on a cloud platform. As shown in FIG. 9, the cloud service-based data forwarding system 90 may include a first cloud system 11. The first cloud system 11 includes a cloud computing device 111 and a forwarding device 112. The first cloud system 11 and an extranet system are connected to each other through an extranet gateway.

The forwarding device 112 is configured to obtain a target packet sent by the cloud computing device 111 to the extranet system. The forwarding device 112 is further configured to obtain a forwarding attribute of the cloud computing device 111. When the forwarding attribute of the cloud computing device 111 is a first attribute, the forwarding device 112 is configured to forward the target packet by using the extranet gateway as a next hop of the target packet. When the forwarding attribute of the cloud computing device 111 is a second attribute, the forwarding device 112 is configured to forward the target packet to the extranet gateway based on a routing relationship of the forwarding device 112.

Optionally, the forwarding device 112 is further configured to receive a configuration instruction, where the configuration instruction indicates the forwarding attribute of the cloud computing device 111. The forwarding device 112 is further configured to configure, according to the configuration instruction, a policy for forwarding the packet of the cloud computing device 111.

Optionally, as shown in FIG. 10, the system further includes a cloud management system 13. The cloud management system 13 is configured to: receive a purchase request sent by a user, where the purchase request indicates to purchase the cloud computing device 111, and the purchase request carries the configuration instruction; configure the cloud computing device 111 based on the purchase request; and send the configuration instruction to the forwarding device 112.

Optionally, the cloud management system 13 is further configured to: receive a configuration instruction sent by a user, where the configuration instruction indicates a forwarding attribute of a purchased cloud computing device 111; and send the configuration instruction to the forwarding device 112.

Optionally, the cloud management system 13 is further configured to: receive a modification instruction sent by the user, where the modification instruction instructs to modify the forwarding attribute of the cloud computing device 111; and send the modification instruction to the forwarding device 112. In this case, the forwarding device 112 is further configured to adjust, based on a forwarding attribute indicated by the modification instruction, the policy for forwarding the packet of the cloud computing device 111.

Optionally, the cloud management system 13 is further configured to: send the modification instruction to the cloud computing device 111, and stop a service of the cloud computing device 111 according to the modification instruction.

Optionally, the cloud management system 13 is further configured to: receive a stop instruction sent by the user, where the stop instruction instructs to stop a service of the cloud computing device 111, to modify the forwarding attribute of the cloud computing device 111; and send the stop instruction to the cloud computing device 111.

In this case, the cloud computing device 111 is further configured to stop the service of the cloud computing device 111 according to the stop instruction.

It can be learned from the foregoing that, in the cloud service-based data forwarding system provided in embodiments of this application, a forwarding device obtains a target packet sent by a cloud computing device to an extranet system, and obtains a forwarding attribute of the cloud computing device. When the forwarding attribute of the cloud computing device is a first attribute, the forwarding device forwards the target packet by using an extranet gateway as a next hop of the target packet. When the forwarding attribute of the cloud computing device is a second attribute, the forwarding device forwards the target packet to an extranet gateway based on a routing relationship of the forwarding device. In this way, the forwarding device can forward the target packet of the cloud computing device based on different forwarding attributes of the cloud computing device according to different forwarding policies, to provide differentiated forwarding capabilities, and improve flexibility of packet forwarding. This helps meet differentiated requirements of a user on a cloud service in different scenarios, thereby implementing a cloud service that better meets a customer requirement.

Each of the first cloud system 11, the cloud management system 13, the cloud computing device 111, and the forwarding device 112 may be implemented by using software, or may be implemented by using hardware. For example, the following uses the first cloud system 11 as an example to describe an implementation of the first cloud system 11. Similarly, for implementations of the cloud management system 13, the cloud computing device 111, and the forwarding device 112, refer to the implementation of the first cloud system 11.

In an example of a software functional unit, the first cloud system 11 may include code that is run on a computing instance. The computing instance may include at least one of a physical host (computing device), a virtual machine, and a container. Further, there may be one or more computing instances. For example, the first cloud system 11 may include code that is run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. A communication gateway needs to be disposed in each VPC for communication between two VPCs in a same region and for cross-region communication between VPCs in different regions. The VPCs are interconnected through the communication gateway.

In an example of a hardware functional unit, the first cloud system 11 may include at least one computing device, for example, a server. Alternatively, the first cloud system 11 may be a device implemented by using an application-specific integrated circuit (application-specific integrated circuit, ASIC) or a programmable logic device (programmable logic device, PLD), or the like. The PLD may be implemented by using a complex programmable logical device (complex programmable logical device, CPLD), a field programmable gate array (field programmable gate array, FPGA), generic array logic (generic array logic, GAL), or any combination thereof.

A plurality of computing devices included in the first cloud system 11 may be distributed in a same region, or may be distributed in different regions. The plurality of computing devices included in the first cloud system 11 may be distributed in a same AZ, or may be distributed in different AZs. Similarly, the plurality of computing devices included in the first cloud system 11 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in another embodiment, any one of the first cloud system 11, the cloud management system 13, the cloud computing device 111, and the forwarding device 112 may be configured to perform any step in the cloud service-based data forwarding method. Steps implemented by the first cloud system 11, the cloud management system 13, the cloud computing device 111, and the forwarding device 112 may be specified as required. The first cloud system 11, the cloud management system 13, the cloud computing device 111, and the forwarding device 112 respectively implement different steps in the cloud service-based data forwarding method, to implement all functions of the cloud service-based data forwarding system.

It may be clearly understood by a person skilled in the art that, for the purpose of convenient and brief description, for detailed working processes of the foregoing components, refer to corresponding content in the foregoing method embodiments. Details are not described herein again.

The following describes basic hardware structures in embodiments of this application by using examples.

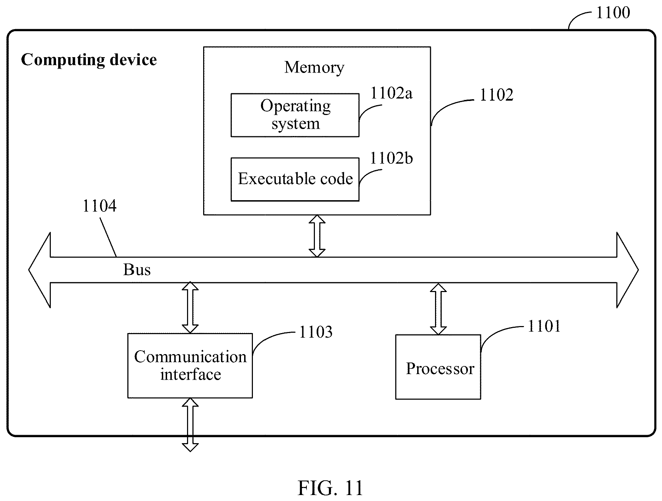

An embodiment of this application provides a computing device. The computing device is configured to implement some or all functions of the cloud service-based data forwarding method provided in embodiments of this application. FIG. 11 is a diagram of a structure of a computing device according to an embodiment of this application. As shown in FIG. 11, the computing device 1100 includes a processor 1101, a memory 1102, a communication interface 1103, and a bus 1104. Communication connections between the processor 1101, the memory 1102, and the communication interface 1103 are implemented through the bus 1104.

The processor 1101 may include a general-purpose processor and/or a dedicated hardware chip. The general-purpose processor may include a central processing unit (central processing unit, CPU), a microprocessor, or a graphics processing unit (graphics processing unit, GPU). For example, the CPU is a single-core processor (single-CPU), or a multi-core processor (multi-CPU). The dedicated hardware chip is a hardware module capable of performing high-performance processing. The dedicated hardware chip includes at least one of a digital signal processor, an application-specific integrated circuit (application-specific integrated circuit, ASIC), a field programmable gate array (field programmable gate array, FPGA), or a network processor (network processor, NP). The processor 1101 may alternatively be an integrated circuit chip and has a signal processing capability. In an implementation process, some or all of the functions of the cloud service-based data forwarding method in this application may be completed through an integrated logic circuit of hardware in the processor 1101 or by using instructions in a form of software.

The memory 1102 is configured to store a computer program, and the computer program includes an operating system 1102a and executable code (namely, program instructions) 1102b. For example, the memory 1102 is a read-only memory or another type of static storage device that can store static information and instructions, or the memory 1102 is a random access memory or another type of dynamic storage device that can store information and instructions, or the memory 1102 is an electrically erasable programmable read-only memory, a compact disc read-only memory or another optical disc storage, optical disk storage (including a compact disk, a laser disk, an optical disk, a digital versatile disk, a Blu-ray disk, and the like), a magnetic disk storage medium or another magnetic storage device, or any other medium that can be used to carry or store expected executable code in a form of instructions or a data structure and that is accessible by a computer, but is not limited thereto. For example, the memory 1102 is configured to store an outbound port queue. For example, the memory 1102 exists independently, and is connected to the processor 1101 through the bus 1104. Alternatively, the memory 1102 is integrated with the processor 1101. The memory 1102 may store executable code. When the executable code stored in the memory 1102 is executed by the processor 1101, the processor 1101 is configured to perform some or all of the functions of the cloud service-based data forwarding method provided in embodiments of this application. For an implementation of performing the process by the processor 1101, refer to related descriptions in the foregoing embodiments. The memory 1102 may further include a software module, data, and the like that are needed for a running process, for example, an operating system.

The communication interface 1103 uses a transceiver module, for example, but not limited to a transceiver, to implement communication with another device or a communication network. For example, the communication interface 1103 may be any one or any combination of the following components with a network access function, such as a network interface (for example, an Ethernet interface) and a wireless network interface card.

The bus 1104 is any type of communication bus configured to implement interconnection between internal components (for example, the memory 1102, the processor 1101, and the communication interface 1103) in the computing device, for example, a system bus. In embodiments of this application, an example in which the foregoing components in the computing device are interconnected through the bus 1104 is used for description. Optionally, the foregoing components in the computing device 1100 may be communicatively connected to each other in another connection manner other than through the bus 1104. For example, the foregoing components in the computing device 1100 are interconnected through an internal logical interface.

It should be noted that the foregoing plurality of components may be separately disposed on chips independent of each other, or at least some or all of the components may be disposed on a same chip. Whether the components are separately disposed on different chips or integrated and disposed on one or more chips usually depends on a product design need. Specific implementations of the foregoing components are not limited in embodiments of this application. In addition, descriptions of procedures corresponding to the foregoing accompanying drawings have respective focuses. For a part that is not described in detail in a procedure, refer to related descriptions of another procedure.

All or some of the foregoing embodiments may be implemented by using software, hardware, firmware, or any combination thereof. When software is used for implementation, all or some of embodiments may be implemented in a form of a computer program product. A computer program product that provides a program development platform includes one or more computer instructions. When the computer program instructions are loaded and executed on the computing device, all or some of the functions of the cloud service-based data forwarding method provided in embodiments of this application are implemented.

In addition, the computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores computer program instructions that provide the program development platform.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

Optionally, for a structure of the at least one computing device included in the computing device cluster, refer to the computing device 1100 shown in FIG. 11. Memories 1102 in one or more computing devices 1100 in the computing device cluster may store same instructions for performing the cloud service-based data forwarding method.

In some possible implementations, the memories 1102 in the one or more computing devices 1100 in the computing device cluster may alternatively separately store some instructions for performing the cloud service-based data forwarding method. In other words, a combination of the one or more computing devices 1100 may jointly execute instructions for performing the cloud service-based data forwarding method.

It should be noted that memories 1102 in different computing devices 1100 in the computing device cluster may store different instructions that are separately used for performing some functions of the cloud service-based data forwarding apparatus. In other words, the instructions stored in the memories 1102 in different computing devices 1100 may be used to implement functions of one or more components of the first cloud system 11, the cloud management system 13, the cloud computing device 111, and the forwarding device 112.

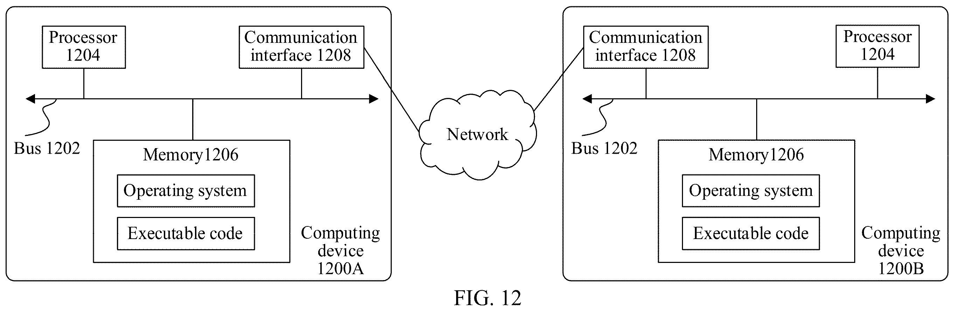

In some possible implementations, the one or more computing devices in the computing device cluster may be connected via a network. The network may be a wide area network, a local area network, or the like. FIG. 12 shows a possible implementation. As shown in FIG. 12, two computing devices 1200A and 1200B are connected via a network. Specifically, each computing device is connected to the network through a communication interface in the computing device. In this possible implementation, each of the computing devices 1200A and 1200B includes a bus 1202, a processor 1204, a memory 1206, and a communication interface 1208. The memory 1206 in the computing device 1200A stores instructions for performing a function of the first cloud system 11. In addition, the memory 1206 in the computing device 1200B stores instructions for performing a function of the cloud management system 13.

It should be understood that a function of the computing device 1200A shown in FIG. 12 may alternatively be completed by a plurality of computing devices 1200. Similarly, a function of the computing device 1200B may alternatively be completed by a plurality of computing devices 1200. In addition, a manner of deploying modules configured to implement the cloud service-based data forwarding method in the computing device may also be adjusted based on an application requirement.

An embodiment of this application further provides a computer-readable storage medium. The computer-readable storage medium is a non-volatile computer-readable storage medium. The computer-readable storage medium includes program instructions. When the program instructions are run on a computing device, the computing device is caused to implement the cloud service-based data forwarding method provided in embodiments of this application.

An embodiment of this application further provides a computer program product including instructions. When the computer program product runs on a computer, the computer is caused to implement the cloud service-based data forwarding method provided in embodiments of this application.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

It should be noted that information (including but not limited to user equipment information, personal information of a user, and the like), data (including but not limited to data used for analysis, stored data, displayed data, and the like), and signals in this application are under authorization from the user or full authorization from all parties, and collection, use, and processing of related data need to conform to related laws, regulations, and standards of related countries and regions. For example, raw data, executable code, and the like in this application are obtained under full authorization.

In embodiments of this application, the terms "first", "second", and "third" are merely intended for description, and shall not be understood as an indication or implication of relative importance. The term "at least one" means one or more, and the term "a plurality of" means two or more, unless otherwise expressly limited.

The term "and/or" in this application merely describes an association relationship between associated objects, and indicates that three relationships may exist. For example, A and/or B may indicate the following three cases: Only A exists, both A and B exist, and only B exists. In addition, the character "/" in this specification generally indicates an "or" relationship between the associated objects.

The foregoing descriptions are merely optional embodiments of this application, but are not intended to limit this application. Any modification, equivalent replacement, improvement, or the like made within the scope of the concept and principle of this application shall fall within the protection scope of this application.

## Claims

1. A cloud service-based data forwarding method, wherein the method is applied to a cloud platform, the cloud platform comprises a first cloud system, the first cloud system comprises a cloud computing device and a forwarding device, the first cloud system and an extranet system are connected to each other through an extranet gateway, and the method comprises:
obtaining, by the forwarding device, a target packet sent by the cloud computing device to the extranet system;
obtaining, by the forwarding device, a forwarding attribute of the cloud computing device; and
when the forwarding attribute of the cloud computing device is a first attribute, forwarding, by the forwarding device, the target packet by using the extranet gateway as a next hop of the target packet; or
when the forwarding attribute of the cloud computing device is a second attribute, forwarding, by the forwarding device, the target packet to the extranet gateway based on a routing relationship of the forwarding device.

2. The method according to claim 1, wherein before the obtaining, by the forwarding device, the forwarding attribute of the cloud computing device, the method further comprises:
receiving, by the forwarding device, a configuration instruction, wherein the configuration instruction indicates the forwarding attribute of the cloud computing device; and
configuring, by the forwarding device according to the configuration instruction, a policy for forwarding the packet of the cloud computing device.

3. The method according to claim 2, wherein the cloud platform further comprises a cloud management system, and before the receiving, by the forwarding device, the configuration instruction, the method further comprises:
receiving, by the cloud management system, a purchase request sent by a user, wherein the purchase request indicates to purchase the cloud computing device, and the purchase request carries the configuration instruction; and
configuring, by the cloud management system, the cloud computing device based on the purchase request, and sending the configuration instruction to the forwarding device.

4. The method according to claim 2, wherein the cloud platform further comprises a cloud management system, and before the receiving, by the forwarding device, the configuration instruction, the method further comprises:
receiving, by the cloud management system, a configuration instruction sent by a user, wherein the configuration instruction indicates a forwarding attribute of a purchased cloud computing device; and
sending, by the cloud management system, the configuration instruction to the forwarding device.

5. The method according to any one of claims 2 to 4, wherein the method further comprises:
receiving, by the cloud management system, a modification instruction sent by the user, wherein the modification instruction instructs to modify the forwarding attribute of the cloud computing device;
sending, by the cloud management system, the modification instruction to the forwarding device; and
adjusting, by the forwarding device based on a forwarding attribute indicated by the modification instruction, the policy for forwarding the packet of the cloud computing device.

6. The method according to claim 5, wherein before the adjusting, by the forwarding device based on the forwarding attribute indicated by the modification instruction, the policy for forwarding the packet of the cloud computing device, the method further comprises:
sending, by the cloud management system, the modification instruction to the cloud computing device; and
stopping, by the cloud computing device, a service of the cloud computing device according to the modification instruction.

7. The method according to claim 5, wherein before the adjusting, by the forwarding device based on the forwarding attribute indicated by the modification instruction, the policy for forwarding the packet of the cloud computing device, the method further comprises:
receiving, by the cloud management system, a stop instruction sent by the user, wherein the stop instruction instructs to stop a service of the cloud computing device, to modify the forwarding attribute of the cloud computing device;
sending, by the cloud management system, the stop instruction to the cloud computing device; and
stopping, by the cloud computing device, the service of the cloud computing device according to the stop instruction.

8. A cloud service-based data forwarding system, wherein the system is used in a cloud platform, the system comprises a first cloud system, the first cloud system comprises a cloud computing device and a forwarding device, and the first cloud system and an extranet system are connected to each other through an extranet gateway;
the forwarding device is configured to obtain a target packet sent by the cloud computing device to the extranet system;
the forwarding device is further configured to obtain a forwarding attribute of the cloud computing device; and
when the forwarding attribute of the cloud computing device is a first attribute, the forwarding device is configured to forward the target packet by using the extranet gateway as a next hop of the target packet; or
when the forwarding attribute of the cloud computing device is a second attribute, the forwarding device is configured to forward the target packet to the extranet gateway based on a routing relationship of the forwarding device.

9. The system according to claim 8, wherein
the forwarding device is further configured to receive a configuration instruction, wherein the configuration instruction indicates the forwarding attribute of the cloud computing device; and
the forwarding device is further configured to configure, according to the configuration instruction, a policy for forwarding the packet of the cloud computing device.

10. The system according to claim 9, wherein the system further comprises a cloud management system;
the cloud management system is configured to receive a purchase request sent by a user, wherein the purchase request indicates to purchase the cloud computing device, and the purchase request carries the configuration instruction; and
the cloud management system is further configured to: configure the cloud computing device based on the purchase request, and send the configuration instruction to the forwarding device.

11. The system according to claim 9, wherein the system further comprises a cloud management system;
the cloud management system is further configured to receive a configuration instruction sent by a user, wherein the configuration instruction indicates a forwarding attribute of a purchased cloud computing device; and
the cloud management system is further configured to send the configuration instruction to the forwarding device.

12. The system according to any one of claims 9 to 11, wherein
the cloud management system is further configured to receive a modification instruction sent by the user, wherein the modification instruction instructs to modify the forwarding attribute of the cloud computing device;
the cloud management system is further configured to send the modification instruction to the forwarding device; and
the forwarding device is further configured to adjust, based on a forwarding attribute indicated by the modification instruction, the policy for forwarding the packet of the cloud computing device.

13. The system according to claim 12, wherein
the cloud management system is further configured to send the modification instruction to the cloud computing device; and
the cloud computing device is further configured to stop a service of the cloud computing device according to the modification instruction.

14. The system according to claim 12, wherein
the cloud management system is further configured to receive a stop instruction sent by the user, wherein the stop instruction instructs to stop a service of the cloud computing device, to modify the forwarding attribute of the cloud computing device;
the cloud management system is further configured to send the stop instruction to the cloud computing device; and
the cloud computing device is further configured to stop the service of the cloud computing device according to the stop instruction.

15. A computing device cluster, comprising a plurality of computing devices, wherein the plurality of computing devices comprise a plurality of processors and a plurality of memories, the plurality of memories store program instructions, and the plurality of processors run the program instructions, to cause the computing device cluster to perform the method according to any one of claims 1 to 7.

16. A computer-readable storage medium, comprising program instructions, wherein when the program instructions are run on a computing device, the computing device is caused to perform the method according to any one of claims 1 to 7.

17. A computer program product comprising instructions, wherein when the computer program product runs on a computer, the computer is caused to perform the method according to any one of claims 1 to 7.
